# EUROPEAN PATENT APPLICATION

(11) **EP 2 623 850 A1**
(43) Date of publication of application: **07.08.2013**
(21) Application number: 11828328.2
(22) Date of filing: 08.09.2011
(51) Int. Cl.: F21S 8/10, F21Y 101/02

(54) **CIRCUIT MODULE, LIGHT-EMITTING MODULE, AND VEHICLE LAMP**

(30) Priority: 28.09.2010 JP 2010217565
(71) Applicant: Koito Manufacturing Co., Ltd., Tokyo 108-8711 (JP)
(72) Inventor: SUZUKI, Tetsuya, Shizuoka-shi, Shizuoka 424-8764 (JP); MATSUMOTO, Akihiro, Shizuoka-shi, Shizuoka 424-8764 (JP); NAKAGAWA, Tomoyuki, Shizuoka-shi, Shizuoka 424-8764 (JP); SONE, Naoki, Shizuoka-shi, Shizuoka 424-8764 (JP)
(74) Representative: Algemeen Octrooi- en Merkenbureau
(86) International application number: PCT/JP2011/005053
(87) International publication number: WO 2012/042761

(57) **Abstract**

In a circuit module 14, a supporting member 24 has both an element mounting surface on which a package 16 can be mounted and a circuit mounting surface on which a lighting control circuit 22 that controls lighting of a semiconductor light emitting element can be mounted. The lighting control circuit 22 is mounted on the circuit mounting surface. The circuit mounting surface is formed so as to be orthogonalized or inclined with respect to the element mounting surface. Thereby, the length in the longitudinal direction of the circuit module can be made smaller in comparison with that of a circuit module in which a circuit mounting surface and an element mounting surface are formed on the same plane.

## Description

### TECHNICAL FIELD

The present invention relates to a circuit module, a light emitting module, and an automotive lamp.

### BACKGROUND ART

Until now, a technique is being developed, in which a semiconductor light emitting element, such as an LED (Light Emitting Diode), is used in an automotive lamp as a light source. In such an automotive lamp, a circuit for controlling lighting of the semiconductor light emitting element may be required. Accordingly, a light source module including a mounting board in which a semiconductor light emitting element and a lighting circuit are mounted on the same plane is devised (see Patent Document 1).

### Patent Document

[Patent Document 1] Japanese Patent Application Publication No. 2005-259603

### DISCLOSURE OF THE INVENTION

### Problem to be Solved by the Invention

On the other hand, because the number of parts of a vehicle is increased with both the installation of electronic components in the vehicle and the multi-functionalization of the vehicle, and because it is required that flexibility in the layout of components or the vehicle design should be increased, an automotive lamp is also required to be miniaturized and occupy a small space. In the case of, for example, the mounting board described in the aforementioned Patent Document, however, a semiconductor light emitting element and a lighting circuit are mounted on the same plane and the mounting board is arranged such that the longitudinal direction thereof is parallel to the optical axis direction of the automotive lamp. Accordingly, there is a limit in making the length in the optical axis direction of an automotive lamp including such a mounting board to be small.

The present invention has been made in view of these situations, and a purpose of the invention is to provide a circuit module and a light emitting module that contribute to miniaturization of an automotive lamp.

### Means for Solving the Problem

In order to solve the aforementioned problem, a circuit module according to an embodiment of the present invention comprises: a heat radiating plate having both an element mounting surface on which a semiconductor light emitting element can be mounted and a circuit mounting surface on which a lighting control circuit that controls lighting of the semiconductor light emitting element can be mounted; and a lighting control circuit mounted on the circuit mounting surface. The circuit mounting surface is formed so as to be orthogonalized or inclined with respect to the element mounting surface.

According to this embodiment, the length in the longitudinal direction of the circuit module can be made smaller in comparison with that of a circuit module in which a circuit mounting surface and an element mounting surface are formed on the same plane.

Another embodiment of the present invention is a light emitting module. This light emitting module has the aforementioned circuit module and a semiconductor light emitting element mounted on an element mounting surface.

According to this embodiment, the length in the longitudinal direction of the light emitting module can be made smaller in comparison with that of a light emitting module in which a lighting control circuit and a semiconductor light emitting element are mounted on the same plane.

Still another embodiment of the present invention is an automotive lamp. This automotive lamp is used in a vehicle and comprises: the light emitting module; and a reflector configured to reflect the light emitted from the light emitting module toward the vehicle front side. The light emitting module is arranged such that an element mounting surface faces the reflector.

According to this embodiment, the automotive lamp can be made compact in the longitudinal direction thereof.

Still another embodiment of the present invention is a light emitting module. This light emitting module comprises: a heat radiating plate having a mounting surface on which a component can be mounted; a semiconductor light emitting element mounted on the mounting surface; and a lighting control circuit that is mounted on the mounting surface to control lighting of the semiconductor light emitting element. The semiconductor light emitting element is arranged such that a major light emitting surface is orthogonalized or inclined with respect to the mounting surface.

When one light emitting surface is present, the major light emitting surface described herein means the light emitting surface. Alternatively, when multiple light emitting surfaces are present, the major light emitting surface means the surface from which the largest amount of light is emitted. According to this embodiment, the length of the light emitting module, in the direction perpendicular to the normal of the major light emitting surface, can be made smaller in comparison with that of a light emitting module in which a major light emitting surface of a semiconductor light emitting element and a mounting surface of a lighting control circuit are formed to be parallel to each other.

Still another embodiment of the present invention is an automotive lamp. This automotive lamp is used in a vehicle and comprises: the light emitting module; and a reflector configured to reflect the light emitted from the light emitting module toward the vehicle front side. The light emitting module is arranged such that a major light emitting surface faces the reflector.

According to this embodiment, the automotive lamp can be made compact in the longitudinal direction thereof.

Optional combinations of the aforementioned constituting elements and implementations of the present invention in the form of methods, apparatuses, or systems may also be practiced as additional modes of the invention.

### Advantage of the Invention

According to the present invention, a circuit module and a light emitting module that contribute to miniaturization of an automotive lamp can be provided.

### BRIEF DESCRIPTION OF THE DRAWINGS

Fig. 1 is a sectional view illustrating the schematic structure of an automotive headlamp according to First Embodiment;
Fig. 2 is a sectional view illustrating the schematic structure of an automotive headlamp according to Second Embodiment;
Fig. 3 is a perspective view illustrating the schematic structure of a light emitting module according to Second Embodiment;
Fig. 4 is a perspective view of a package according to Second Embodiment;
Fig. 5 is a sectional view illustrating the schematic structure near to a light emitting module according to Third Embodiment;
Fig. 6 is a sectional view illustrating the schematic structure near to a light emitting module according to Fourth Embodiment; and
Fig. 7 is a sectional view illustrating the schematic structure of an automotive headlamp according to Fourth Embodiment.

### BEST MODE FOR CARRYING OUT THE INVENTION

Hereinafter, preferred embodiments for carrying out the present invention will be described in detail with reference to the accompanying drawings. In the description of the drawings, like elements will be denoted with like reference numerals and duplicative description will be appropriately omitted.

### (First Embodiment)

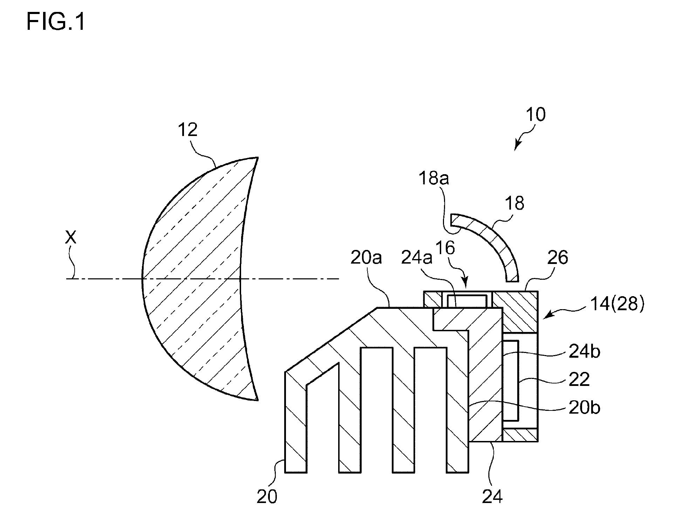

In First Embodiment, an automotive headlamp, which is one of the automotive lamps, will be described as an example. Fig. 1 is a sectional view illustrating the schematic structure of an automotive headlamp 10 according to First Embodiment. The automotive headlamp 10 illustrated in Fig. 1 is configured such that the later-described projection lens is located on the vehicle front side and the later-described light emitting module is located on the vehicle rear side. Herein, the line X is an optical axis.

The automotive headlamp 10 comprises a projection lens 12, a circuit module 14, a package 16, a reflector 18, and a heat sink 20. The projection lens 12 is an aspheric surface convex lens whose front side surface is formed to have a convex surface, and projects a light source image toward the front of the lamp as an inverted image. The package 16 includes a semiconductor light emitting element, such as an LED.

The circuit module 14 includes: a lighting control circuit 22 that controls lighting of the semiconductor light emitting element included in the package 16; a supporting member 24 that supports the package 16 and the lighting control circuit 22; and a housing 26 in which a wiring that electrically connects the package 16 and the lighting control circuit 22 is provided. Herein, a module in which the package 16 is mounted in the circuit module 14 is referred to as a light emitting module 28.

The supporting member 24 is formed by processing a plate-shaped member into an L-shape. The L-shaped supporting member 24 has two planes 24a and 24b. The package 16 is mounted, of the two planes, on the plane 24a, which is an upper surface and serves as an element mounting surface. The lighting control circuit 22 is mounted, of the two planes, on the plane 24b, which is the side surface and serves as a circuit mounting surface. The supporting member 24 according to the present embodiment is made of a metal material and functions as a heat radiating plate.

The reflector 18 is provided so as to cover the package 16 from above, and in the inside of the reflector 18, a reflecting surface 18a that collects the light emitted from the package 16 by reflecting the light forward. That is, the light emitting module 28 is arranged such that the plane 24a, which is the element mounting surface of the supporting member 24, faces the reflector 18. Thereby, the reflector 18 collects the light emitted from the package 16 by reflecting the light on the reflecting surface 18a.

The supporting member 24 is fixed to the rear side surface and the upper surface of the heat sink 20. The heat sink 20 suppresses an increase in the temperature of each of the package 16 and the lighting control circuit 22 by recovering, through the supporting member 24, the heat emitted from the package 16 and the lighting control circuit 22 to radiate the heat. The upper surface 20a of the heat sink 20 is processed so as to function as a shade by which part of the light, which has been emitted from the package 16 and reflected by the reflector 18, is blocked.

In the circuit module 14 according to the present embodiment, the plane 24b, which is the circuit mounting surface of the supporting member 24, is formed so as to be orthogonalized with respect to the plane 24a, which is the element mounting surface of the supporting member 24. Accordingly, the length in the longitudinal direction of the circuit module 14 can be made smaller in comparison with that of a circuit module in which a circuit mounting surface and an element mounting surface are formed on the same plane. Alternatively, the plane 24b may be formed so as to be inclined with respect to the plane 24a.

With such a structure, the lighting control circuit 22 in the circuit module 14 or the light emitting module 28 can be provided on the rear side surface 20b of the heat sink 20, not on the upper surface 20a thereof. As a result, the automotive headlamp 10 can be made compact in the longitudinal direction thereof and can be miniaturized.

### (Second Embodiment)

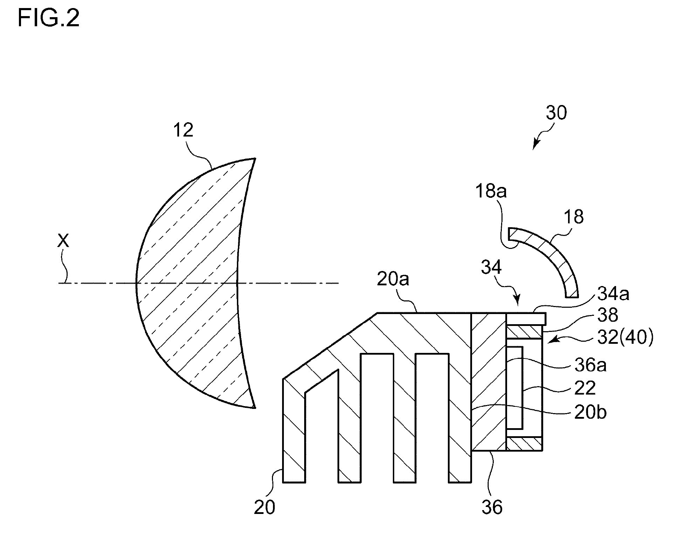

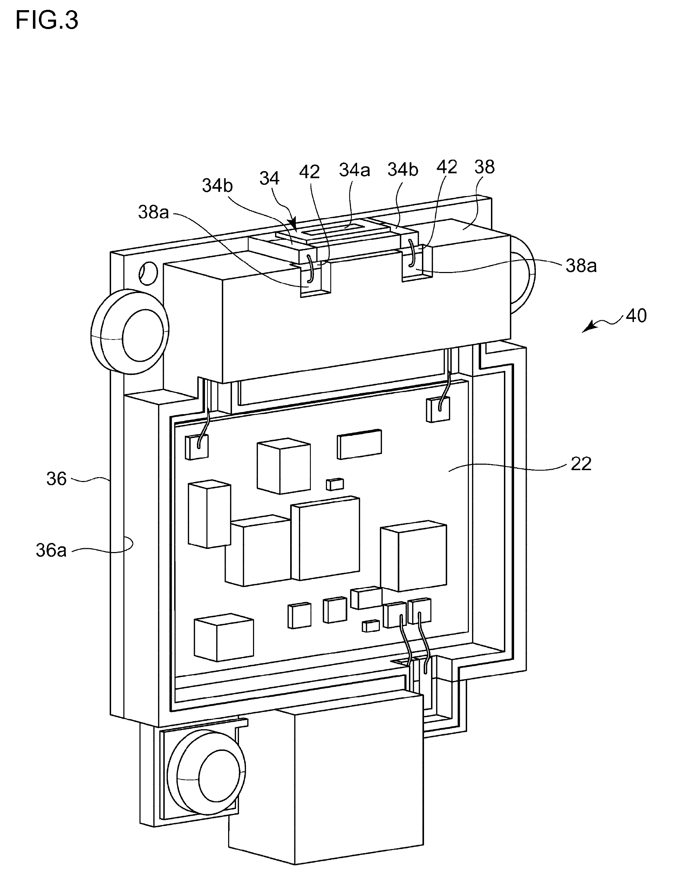

Fig. 2 is a sectional view illustrating the schematic structure of an automotive headlamp 30 according to Second Embodiment. Fig. 3 is a perspective view illustrating the schematic structure of a light emitting module according to Second Embodiment. The automotive headlamp 30 illustrated in Fig. 2 is configured such that a projection lens is located on the vehicle front side and the light emitting module is located on the vehicle rear side.

The automotive headlamp 30 comprises a projection lens 12, a circuit module 32, a package 34, a reflector 18, and a heat sink 20. The package 34 includes a semiconductor light emitting elements, such as an LED.

The circuit module 32 includes: a lighting control circuit 22 that controls lighting of the semiconductor light emitting element included in the package 34; a supporting member 36 that supports the package 34 and the lighting control circuit 22; and a housing 38 in which a wiring that electrically connects the package 34 and the lighting control circuit 22 is provided. Herein, a module in which the package 34 is mounted in the circuit module 32 is referred to as a light emitting module 40.

The supporting member 36 is a plate-shaped member made of a metal material and functions as a heat radiating plate. The package 34 and the lighting control circuit 22 are mounted on a mounting surface 36a of the supporting member 36, on which a component can be mounted.

The reflector 18 is provided so as to cover the package 34 from above, and in the inside of the reflector 18, a reflecting surface 18a that collects the light emitted from the package 34 by reflecting the light forward. Thereby, the reflector 18 collects the light emitted from the package 16 by reflecting the light on the reflecting surface 18a.

The supporting member 36 is fixed to the rear side surface 20b of the heat sink 20. The heat sink 20 suppresses an increase in the temperature of each of the package 34 and the lighting control circuit 22 by recovering, through the supporting member 36, the heat emitted from the package 34 and the lighting control circuit 22 to radiate the heat.

The package 34 according to the present embodiment is mounted on the mounting surface 36a of the supporting member 36 such that a major light emitting surface 34a is orthogonalized with respect to the mounting surface 36a. That is, the light emitting module 40 is arranged such that the major light emitting surface 34a faces the reflector 18. When one light emitting surface is present, the major light emitting surface 34a described herein means the light emitting surface. Alternatively, when multiple light emitting surfaces are present, the major light emitting surface means the surface from which the largest amount of light is emitted. Accordingly, the length (thickness) of the light emitting module 40, in the direction perpendicular to the normal of the major light emitting surface 34a, can be made smaller in comparison with that of a light emitting module in which a major light emitting surface of a semiconductor light emitting element and a mounting surface of a lighting control circuit are formed to be parallel to each other. Alternatively, the major light emitting surface 34a may be formed so as to be inclined with respect to the mounting surface 36a.

With such a structure, the lighting control circuit 22 in the circuit module 32 or the light emitting module 40 can be provided on the rear side surface 20b of the heat sink 20, not on the upper surface 20a thereof. As a result, the automotive headlamp 30 can be made compact in the longitudinal direction thereof and can be miniaturized.

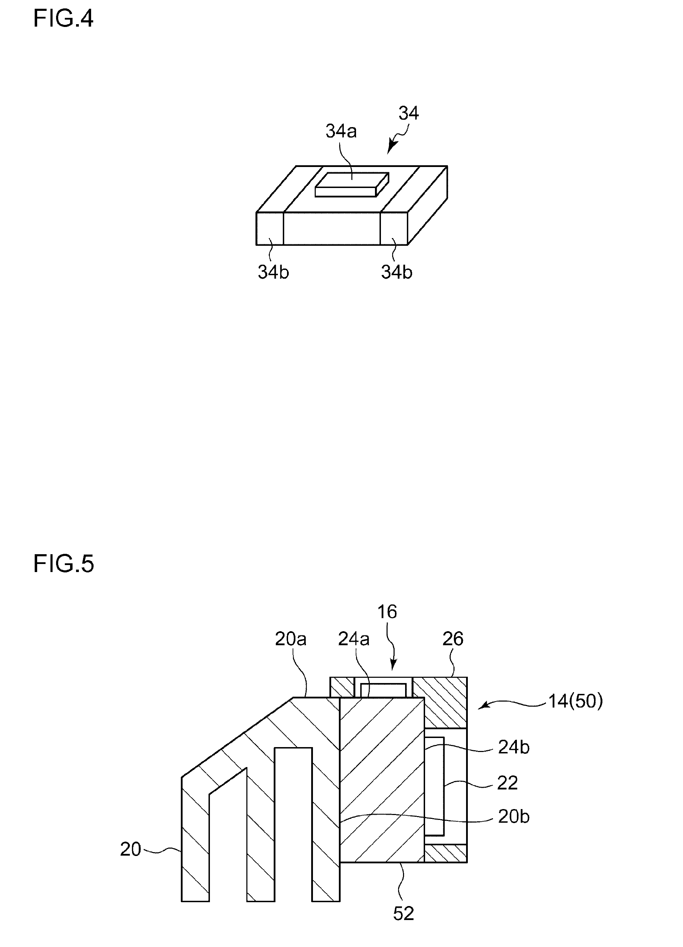

Fig. 4 is a perspective view of the package 34 according to Second Embodiment. As illustrated in the view, a pair of side electrodes 34b are provided on the side surface orthogonalized (intersected) with respect to the major light emitting surface 34a in the package 34. When the major light emitting surface 34a of the package 34 and the mounting surface 36a are not parallel to each other, as illustrated in Figs. 2 and 3, it is difficult to connect, by wire bonding, the major light emitting surface 34a and a conductive portion 38a, which is a wiring held by the housing 38 and is exposed in a region parallel to the mounting surface 36a.

Accordingly, the side electrodes 34b in the package 34 and the conductive portion 38a in the housing 38 are connected together with a conductive member 42, such as an Au wire, Al wire, Al ribbon, or the like, in the present embodiment. The connection between the package and the lighting control circuit may be performed with a wiring substrate, or the like, such as an FPC.

### (Third Embodiment)

Fig. 5 is a sectional view illustrating the schematic structure near to a light emitting module according to Third Embodiment. In the view, a projection lens and a reflector are omitted. A light emitting module 50 according to Third Embodiment has a structure almost the same as that of the light emitting module 28 according to First Embodiment, but is mainly different in that a supporting member 52, which functions as a heat radiating plate, has a plate (thick plate) shape, not an L-shape. Because the plate-shaped supporting member 52 does not need bending processing, the processing cost can be more reduced than that of an L-shaped supporting member. Because other structures of the light emitting module 50 are substantially the same as those of the light emitting module according to First Embodiment, a corresponding structure is denoted with like reference numeral and description thereof will be omitted.

### (Fourth Embodiment)

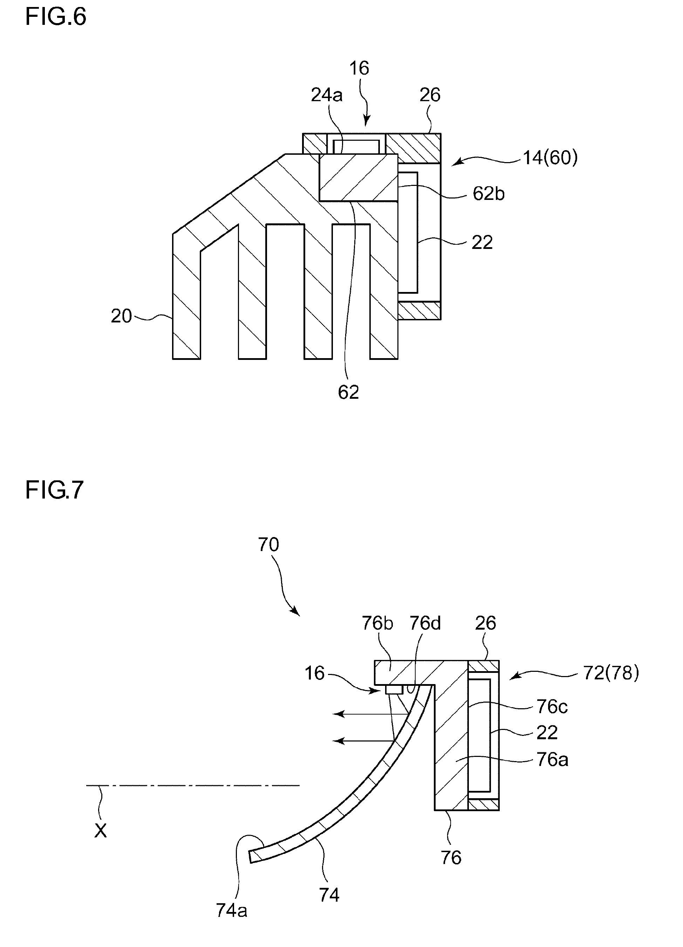

Fig. 6 is a sectional view illustrating the schematic structure near to a light emitting module according to Fourth Embodiment. In the view, a projection lens and a reflector are omitted. Hereinafter, description will be made, of the structures of a light emitting module 60 according to Fourth Embodiment, centered on the structures different from those of the light emitting module 28 according to First Embodiment; and a structure thereof similar to that in First Embodiment is denoted with like reference numeral and description thereof will be omitted.

In the supporting member 24 illustrated in Fig. 1, the whole lighting control circuit 22 is mounted on the plane 24b. However, the heat radiation through the supporting member 24 can be made even when the whole of a circuit is not necessarily in contact with the supporting member, and in particular, when the calorific power of a circuit is not too large, even part of the circuit may be in contact with the supporting member. Accordingly, in a supporting member 62 according to the present embodiment, the plane 62b thereof that is in contact with the bottom surface of the lighting control circuit 22 is made small, so that the supporting member is configured to be in contact with part of the lighting control circuit 22. That is, with this structure, the supporting member 62 is miniaturized. As a result, cost reduction can be made due to reductions in the material cost and the processing cost of the supporting member.

### (Fifth Embodiment)

Fig. 7 is a sectional view illustrating the schematic structure of an automotive headlamp 70 according to Fourth Embodiment. Hereinafter, a structure similar to that of the automotive headlamp 10 according to First Embodiment is denoted with like reference numeral and description thereof will be omitted.

The automotive headlamp 70 comprises a circuit module 72, a package 16, and a reflector 74. The circuit module 72 includes: a lighting control circuit 22 that controls lighting of a semiconductor light emitting element included in the package 16; a supporting member 76 that supports the package 16 and the lighting control circuit 22; and a housing 26 in which a wiring that electrically connects the package 16 and the lighting control circuit 22 is provided. Herein, a module in which the package 16 is mounted in the circuit module 72 is referred to as a light emitting module 78.

The supporting member 76 is formed by processing a plate-shaped member into an L-shape. The L-shaped supporting member 76 is processed into a shape in which two plate portions 76a and 76b are orthogonalized with each other at their end portions. The lighting control circuit 22 is mounted on a rear side surface 76c of the plate portion 76a extending in the vertical direction, the rear side surface 76c serving as a circuit mounting surface. In addition, the package 16 is mounted on a lower surface 76d of the plate portion 76b extending in the horizontal direction, the lower surface 76d serving as an element mounting surface.

The reflector 74 is provided so as to cover the package 16 from below, and in the inside of the reflector 74, a paraboloidal surface 74a that collects the light emitted from the package 16 by reflecting the light forward. That is, the light emitting module 78 is arranged such that the lower surface 76d, which is the element mounting surface of the supporting member 76, faces the reflector 74. Thereby, the reflector 74 controls light distribution by reflecting the light emitted from the package 16 with the paraboloidal surface 74a.

In the circuit module 72 according to the present embodiment, the rear side surface 76c, which is the circuit mounting surface of the supporting member 76, is formed so as to be orthogonalized with respect to the lower surface 76d, which is the element mounting surface of the supporting member 76. Accordingly, the length in the longitudinal direction of the circuit module 14 can be made smaller in comparison with that of a circuit module in which a circuit mounting surface and an element mounting surface are formed on the same plane. Alternatively, the rear side surface 76c may be formed so as to be inclined with respect to the lower surface 76d.

With such a structure, the lighting control circuit 22 in the circuit module 72 or the light emitting module 78 can be provided on the rear side surface 76c, not on the upper surface of the supporting member 76. As a result, the automotive headlamp 70 can be made compact in the longitudinal direction thereof and can be miniaturized. In addition to that, because the reflector 74, the package 16, and the lighting control circuit 22 can be arranged below the plate portion 76b of the supporting member 76, the automotive headlamp 70 can be made compact in the vertical direction and can be further miniaturized.

In each of the aforementioned embodiments, description has been made, assuming that the supporting member has an L-shape; however, it is needless to say that the supporting member may have an inverted L-shape in some cases.

The present invention has been described above with reference to the aforementioned respective embodiments, but the invention is not limited to the aforementioned respective embodiments, and variations in which each component of the embodiments is appropriately combined or substituted are also encompassed by the invention. In addition, appropriate changes of the combinations or the orders of the processes in the aforementioned embodiments can be made and various modifications, such as design modifications, can be made with respect to the aforementioned embodiments, based on the knowledge of those skilled in the art. Such modified embodiments can also fall in the scope of the invention.

### Reference Numerals

- 10: AUTOMOTIVE HEADLAMP
- 14: CIRCUIT MODULE
- 16: PACKAGE
- 18: REFLECTOR
- 20: HEAT SINK
- 20a: UPPER SURFACE
- 20b: REAR SIDE SURFACE
- 22: LIGHTING CONTROL CIRCUIT
- 24: SUPPORTING MEMBER
- 24a, 24b: PLANE
- 28: LIGHT EMITTING MODULE
- 32: CIRCUIT MODULE
- 34a: MAJOR LIGHT EMITTING SURFACE
- 36a: MOUNTING SURFACE
- 40: LIGHT EMITTING MODULE

### Industrial Applicability

The present invention can be used in automotive lamps, etc.

## Claims

1. A circuit module comprising:
a heat radiating plate having both an element mounting surface on which a semiconductor light emitting element can be mounted and a circuit mounting surface on which a lighting control circuit that controls lighting of the semiconductor light emitting element can be mounted; and
a lighting control circuit mounted on the circuit mounting surface, wherein the circuit mounting surface is formed so as to be orthogonalized or inclined with respect to the element mounting surface.

2. A light emitting module having:
the circuit module according to claim 1; and
a semiconductor light emitting element mounted on the element mounting surface.

3. An automotive lamp to be used in a vehicle, comprising:
the light emitting module according to claim 2; and
a reflector configured to reflect the light emitted from the light emitting module toward the vehicle front side, wherein
the light emitting module is arranged such that the element mounting surface faces the reflector.

4. A light emitting module comprising:
a heat radiating plate having a mounting surface on which a component can be mounted;
a semiconductor light emitting element mounted on the mounting surface; and
a lighting control circuit that is mounted on the mounting surface to control lighting of the semiconductor light emitting element, wherein
the semiconductor light emitting element is arranged such that a major light emitting surface is orthogonalized or inclined with respect to the mounting surface.

5. An automotive lamp to be used in a vehicle, comprising:
the light emitting module according to claim 4; and
a reflector configured to reflect the light emitted from the light emitting module toward the vehicle front side, wherein
the light emitting module is arranged such that the major light emitting surface faces the reflector.
